(19)

**Europäisches Patentamt**

**European Patent Office**

**Office européen des brevets**

(11) **EP 4 722 914 A1**

(12) **EUROPEAN PATENT APPLICATION**

(43) Date of publication:
08.04.2026 Bulletin 2026/15

(21) Application number: 25206781.4

(22) Date of filing: 06.10.2025

(51) International Patent Classification (IPC):
*G06F 9/50* (2006.01) *H04L 41/12* (2022.01)

(52) Cooperative Patent Classification (CPC):
**G06F 9/5061; G06F 9/5083; H04L 41/0806;**
**H04L 41/0893; H04L 43/16;** G06F 9/5077;
G06F 2209/504; H04L 41/082; H04L 41/0895;
H04L 41/12; H04L 41/122; H04L 41/145;
H04L 41/16; H04L 43/0805; H04L 43/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 07.10.2024 US 202418908212

(71) Applicant: **Google LLC**
**Mountain View, CA 94043 (US)**

(72) Inventors:
• **RASKASKY, Miriam**
**Mountain View, California 94043 (US)**
• **SAMPATHKUMARAN, Anuj**
**Mountain View, California 94043 (US)**
• **LIN, Yi**
**Mountain View, California 94043 (US)**
• **TRDIN, Nejc**
**8002 Zurich (CH)**

(74) Representative: **Betten & Resch**
**Patent- und Rechtsanwälte PartGmbB**
**Maximiliansplatz 14**
**80333 München (DE)**

(54) **COMPUTING DEVICE TOPOLOGY-AWARE AVAILABILITY MODELING AND COMPUTING RESOURCE PROVISIONING**

(57) Methods, systems, and apparatus, including computer-readable storage media and computer program products for determining thresholds for guaranteeing the availability of partitions of different quantities of computing devices and using those thresholds to more accurately provision computing resources to users of a computing platform. A partition (also called a "slice") of computing devices can be provisioned to a user of a computing platform. Slice-size thresholds can indicate how many computing devices on the platform can be provisioned as part of a single slice. Determining slice-size thresholds before provisioning computing resources reduces or eliminates the chance that requests to provision a slice of computing devices are approved when the platform is not able to fulfill those requests with the largest slice-size possible for a given request.

FIG. 1

EP 4 722 914 A1

**Description**

BACKGROUND

Some computing infrastructures, such as computing platforms, offer computing resources for use in executing workloads, such as training or serving machine learning models, or in deploying software applications. Computing resources can include processors, storage devices, and network devices and can vary from an individual processing core to groups of datacenters, with sub-divisions in between. Users of a computing platform offering resource provisioning services can make requests to reserve sub-divisions of available computing resources. Computing resources are prone to failure or downtime, affecting which parts of the platform may be provisioned in response to a user request.

BRIEF SUMMARY

According to aspects of the disclosure, there are provided methods, systems, and apparatus, including computer-readable storage media and computer program products for determining thresholds for guaranteeing the availability of partitions of different quantities of computing devices and using those thresholds to more accurately provision computing resources to users of a computing platform. A partition (also called a "slice") of computing devices can be provisioned to a user of a computing platform. Slice-size thresholds can indicate how many computing devices on the platform can be provisioned as part of a single slice. Determining slice-size thresholds before provisioning computing resources reduces or eliminates the chance that requests to provision a slice of computing devices are approved when the platform is not able to fulfill those requests with the largest slice-size possible for a given request.

Aspects of the disclosure are directed to determining thresholds for improving the availability of partitions of different quantities of computing devices, and using those thresholds to more efficiently provision computing resources to users of a computing platform. A partition of computing devices can be provisioned to a user of a computing platform. An example type of partition is a slice of computing devices, often connected by an inter-chip-interconnect (ICI). Slices of devices can perform more efficiently than individual devices, for example due to the availability of parallelizing workloads, as well as the availability of an ICI connecting devices in the same slice to allow for faster data communication between devices versus computing resources not sharing an ICI.

A slice-size threshold can be determined by identifying combinations of healthy devices across different groups of devices in the computing platform whose sum adds up to at least the average number of healthy devices across the platform. The number of devices contributed by each group for a combination can be constrained between the minimum number of available devices that are made available for provisioning as part of a slice of the group that is between the number of possible device contributions for the group, and the total number of assigned devices for the group. User requests can include, for example, a request for N devices, and the system can provide a slice of at least size $N$ that meets the user specification of $N$ devices.

The slice-size threshold can indicate how many slices of a particular size can be provisioned by a computing platform. Slice-size can be measured by the number of computing devices making up the slice. Determining slice-size thresholds before provisioning computing resources reduces or eliminates the chance that requests to provision a slice of computing devices are fulfilled without providing the largest slice-size possible for a given request.

Other implementations of these and other aspects include corresponding computer systems, apparatus, methods, computer-readable storage media, and computer programs recorded on one or more computer storage devices, each configured to perform the actions of the methods.

BRIEF DESCRIPTION OF THE DRAWINGS

FIG. 1 is a block diagram of an example provisioning system in a computing platform, according to aspects of the disclosure.

FIG. 2 is a block diagram of example scenarios of two groups of computing devices with an example slice-size threshold for six-device slices, according to aspects of the disclosure.

FIG. 3 is a flow diagram of an example process for provisioning computing resources using slice-size thresholds, according to aspects of the disclosure.

FIG. 4 is a flow diagram of an example process for provisioning computing resources using slice-size thresholds and partially full groups of computing devices, according to aspects of the disclosure.

FIG. 5 is a block diagram of an example computing environment for implementing the system, according to aspects of the disclosure.

DETAILED DESCRIPTION

Overview

Aspects of the disclosure are directed to determining thresholds for improving the availability of partitions of different quantities of computing devices and using those thresholds to more accurately provision computing resources. An example type of partition is a slice, which can be a collection of devices connected by an inter-chip-interconnect (ICI) that are configured to either directly communicate with one another or configured to communicate data to one another through one or more devices in the same slice. Slices of computing devices can generally perform more efficiently than devices that are not in the same slice, for example because devices in the same slice can communicate data faster over the ICI than devices that are not connected over an ICI.

In at least some cases, provisioning computing resources by providing the resources in slices large enough to meet the provisioning request may not be reflected in the provisioning strategy of a computing platform. For example, while recipients of the provisioned computing resources may prioritize the resources being in the same slice to improve the efficiency of workloads or software applications executed or deployed as part of the same slice, the provisioning system may prioritize overall utilization of available computing resources, meaning that the desired computing resources may be provisioned from different locations of the computing platform, and not necessarily from resources that make up a slice. If workloads or software applications planned for execution or deployment on the provisioned computing resources are configured with the assumption that the resources form a slice, then those workloads or applications may operate less efficiently or not all on resources that are not provisioned as a slice.

Slice-size thresholds, as described herein, represent the number of slices that a computing platform can provision of different sizes corresponding to the thresholds. Slice-size can be measured by the quantity of devices in the slice, e.g., a slice with 3 computing devices has a slice-size of 3. As described in more detail herein, a provisioning system can be configured to determine how many slices of size 3 can be provisioned with a predetermined measure of confidence, given that computing resources can fail or become intermittently unavailable. An example slice-size threshold for 3-device slices can be 5, indicating that up to 5 slices having a slice-size of 3, *e.g.,* 3-device slices, can be provisioned within the predetermined measure of confidence.

Determining slice-size thresholds before provisioning computing resources reduces or eliminates the chance that requests to provision a slice of computing devices are provisioned without using the largest slice-size possible to fulfill a provisioning request. Slices that match requests with the corresponding slice-size can be provisioned, reducing the chance of under-provisioning resources for a workload or software application, causing the workload or application to be executed slower or potentially not at all. Instead of relegating computing resources to under-perform due to mismatched provisioning, computing resources that are not large enough in quantity to fulfill a request can be identified as "on-demand," and provisioned for smaller requests in which they are more likely to be used efficiently.

The predetermined measure of confidence used as part of determining the slice-size thresholds addresses a potential problem of device failure and the impact of that failure across computing resources in the same slice. As computing resources in the same slice may be leveraged for different types of parallel computing techniques benefiting from the reduced data communication latency between devices of the same slice, the chance of failure of a single device affecting the performance of other devices in the slice increases. Slice-size thresholds can be determined by identifying combinations of computing devices that are on average not likely to be unavailable within a predetermined uptime threshold, e.g., 95% uptime over a 15-day window.

A computing platform can be organized as groups of computing devices, and larger clusters forming one or more groups of devices. To determine slice-size thresholds, a provisioning system determines, or receives, two additional thresholds: a large-slice device schedulability threshold for each group of computing devices of a larger cluster of groups and a device schedulability threshold for the cluster overall. The large-slice device schedulability threshold is the maximum number of devices that can be provisioned for a given group. The device schedulability threshold is the minimum number of devices across a group (e.g., all cubes in all pods, where a cube is a type of network topology) that are available for provisioning with a predetermined uptime threshold.

The slice-size threshold for a given slice-size can be found by iterating through all possible combinations of healthy devices across multiple groups. A healthy device is a device meeting the predetermined uptime thresholds described above. Each group of devices can contribute different quantities of healthy devices to a given combination. The quantity of healthy devices from a group can be constrained between the minimum number of available devices that are made available for provisioning as part of a slice of the group (e.g., the large-slice device schedulability threshold) on the lower end of possible device contributions for the group, and the total number of assigned devices for the group on the higher end of the possible device contributions.

Combinations that are counted towards determining a slice-size threshold also meet the device schedulability threshold. For example, the sum of devices in a possible combination is equal or approximately equal to (e.g., after rounding) to the device schedulability threshold for the cluster containing the groups from which the combination is formed.

For each possible combination, the number of slices for the given slice-size is calculated. The minimum number of slices that can be created from the possible combinations is the slice-size threshold for the given slice.

Aspects of the disclosure provide for determining a set of possible combinations from partially-full groups of computing devices, that may not have a large-slice device schedulability threshold. A partially-full group is a group of computing devices that has fewer devices than the assigned maximum number that defines a full group on the platform. For example, a full group on the platform may be 100 devices, therefore any group on the platform that has fewer than 100 devices can be considered a partially-full group. A partially-full group may have fewer devices than the large-slice device schedulability threshold, or enough devices to meet the threshold, but not enough to account for a headroom or buffer of spare devices. Instead of using a large-slice device schedulability threshold, a provisioning system can determine the set of possible combinations by having only the average number of healthy devices in the group minus the difference between the full group size and the size of the group count towards the sum of devices that is equal to the device schedulability threshold for the cluster overall.

After finding the set of possible combinations, a provisioning system can determine a slice-size threshold for a given slice-size, e.g., a slice-size of 2, 3, 4, 5, and so on. The system is configured to determine the minimum number of slices of the given slice-size that can be made from each combination. For example, the system can compute the floor of the sum of healthy cubes for each combination, divided by the given slice-size. The minimum of these numbers of slices for each combination can be the slice-size threshold.

A provisioning system can determine multiple slice-size thresholds, for different possible sizes of slices that the system is configured to provision. By determining these thresholds, a system can model the availability of slices that can be provisioned and track how many slices of which sizes have already been provisioned or reserved for use. The system can determine, based at least in part on a slice-size threshold and the tracked counter of provisioned slices, whether a new request can be provisioned as a single slice or not.

As an example, a slice-size threshold for 12-device slices across 4 groups of a platform can be 14 12-device slices. Therefore, when provisioning resources in response to request for 12-device slices, a provisioning system can track how many 12-device slices have already been reserved or are otherwise unavailable for provisioning in response to new requests. Continuing this example, if reservations on the platform took the form of 1 slice of 14 devices, and 2 slices of 64 devices, then the number of 12-device slices currently provisioned is $floor(14/12) + 2 * floor(64/12)) = 1 + 10 = 11$. Therefore, the remaining number of 12-device slices that can be used is 3 12-device slices. Under this remaining number of slices of 12 devices, 3x12-device slices could be provisioned, but a request for 3x13-device or 4x12-device slices would not be provisioned. Different slice-size thresholds can be computed, and re-computed, as requests are fulfilled and resources are provisioned, allowing the system to track what slice-size thresholds have or have not been met for slices of 2 devices, 3 devices, 4 devices, and so on.

Aspects of the disclosure can provide for at least the following technical advantages. Larger slice-sizes can improve the execution of a workload or software application by accumulating the computational capability of multiple devices to operate like a single, more computationally performant, device. At the same time, this linking makes larger slices prone to being unavailable or failure as a whole, for example, if there are interruptions to the processing or communication of data between processing devices in the same slice. While guaranteeing or improving uptime for larger slices is a metric in assessing the reliability of a provisioned slice for a user, it may not weigh as heavily for a system provisioning resources according to broader, system-wide notions of improving resource utilization across all available resources. By determining slice-size thresholds, a provisioning system for a computing platform can provision larger slices that are more reliable in maintaining uptime-an explicit or implicit condition imposed on larger slice requests-while still provisioning resources to improve global utilization overall.

Using both the device schedulability threshold and the large-slice device schedulability threshold allows for determining more accurate slice-size thresholds versus using one of these thresholds alone. For example, using only the large-slice device schedulability threshold can result in slice-size thresholds that are too conservative or lower than what can be determined using both the device schedulability and the large-slice device schedulability threshold as described herein. Large-slice device schedulability factors slice-sizes in a given group but does not account for other groups that are available to potentially provision slices of different sizes. Device schedulability accounts for available devices throughout a cluster but does not indicate whether slices of any given size can be provisioned to any one group in the cluster.

The large-slice device schedulability threshold can be said to provide a guarantee of the maximum slice-size from healthy devices in a group, while the cube schedulability threshold gives a guarantee for the average number of healthy devices across a cluster or collection of groups. With this approach, a provisioning system can match demand with these thresholds, to determine how many healthy devices remain with both thresholds. By provisioning computing resources based at least on the slice-size threshold determine using these additional thresholds, computing resources are provisioned more efficiently. One reason computing resources are provisioned more efficiently is because provisioning is supported by the availability of larger slices modeled by the slice-size thresholds, increasing the chance that larger slices are provisioned in response to requests that are do not include devices that may fail.

Larger slices can be a function of user demand, e.g., represented by requests for increasingly larger swathes of total available computing resources on a platform. These larger requests can reflect the changing nature of workloads performed on computing platforms, for example towards larger machine learning model serving or training benefitting from parallelization techniques across multiple computing devices. Determining the extent at which larger slice-sizes are available through slice-size thresholds for provisioning directly results in more efficient workload execution, at least because more devices in the same slice can be provisioned, thereby increasing the speed at which workloads are executed.

Example Systems

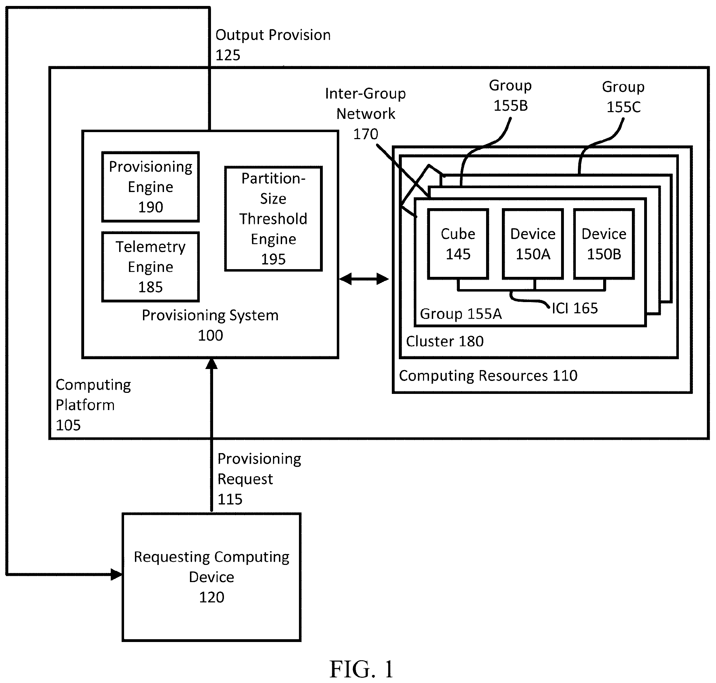

FIG. 1 is a block diagram of an example provisioning system 100 in a computing platform 105 with computing resources 110, according to aspects of the disclosure. The computing resources 110 can be made available for provisioning, in which partitions of the computing resources 110 can be provided for use by computing systems, users, organizations of systems and/or users, and so on. Provisioning requests, such as provisioning request 115 can be sent to the provisioning system 100 from a requesting computing device 120. An output provision 125 can be generated by the provisioning system 100 and sent in response to the request 115.

The output provision 125 can include data, such as passwords, network addresses, identifiers, and/or other access information for identifying and accessing computing resources partitioned by the system 100. The partition can be used, for example, in executing a computational workload, hosting or deploying a software application, or performing other computing tasks.

Computing devices 150A, 150B can refer to entire devices or portions of devices, such as processing units, memory modules like RAM sticks, network interface cards (NICs), and so on. A computing device can be made up of multiple computing devices, e.g., individual devices interconnected according to a cube or other network topology. A computing device can be physical, e.g., a physical graphics processing unit, or virtual, e.g., as part of a computing device that emulates the characteristics or performance of multiple computing devices. The provisioning system can provision computing devices as discrete quantities, e.g., as individual devices, cubes, pods, and so on.

A computing device can be a single device, or a combination of multiple computing devices. Multiple computing devices can be arranged according to a network topology, for example a "cube" topology, in reference to the network connection topology deployed for connecting computing resources in the same cube. Cube 145 can be a cube of computing devices. A cube is an example of a multi-dimensional topology. For example, a cube may be in three dimensions, e.g., 4x4x4, although other dimensions are possible. An example 4x4x4 cube is four computing devices in length, width, and height, where each computing device in the cube is connected to each of its neighbors. Other example topologies can include a multi-dimensional mesh, a multi-dimensional torus, and a twisted torus.

The groups 155A through 155C can form at least part of a larger collection of devices, referred to as a cluster. cluster 180 as shown in FIG. 1 includes groups 155A through 155C. Groups within a cluster can be communicatively coupled, such as through inter-group network 170. The network 170 can be made up of wires, switching devices, wireless transceivers, or any other data communication technology.

There may be one or more additional layers of organization between the groups 155A-155C and cluster 180, not shown here. These or other layers of organization can connect devices using various different communication technologies, such as optical circuit switches. As another example, the groups 155A-155C can be part of larger groups, which form part of the cluster 180. Similarly, the cluster 180 may be a sub-division of the computing resources within a larger collection, e.g., a cluster or entire datacenter. Multiple clusters may form part of a datacenter.

Groups of computing devices, e.g., groups 155A through 155C, can include inter-chip-interconnects (ICIs), such as ICI 165 for group 155A. Processing cores or other devices of the computing resources 110 can communicate over an ICI to accelerate data communication for devices within a group, relative to communication between groups along an inter-group network 170, such as a data-center network. A slice of computing resources can refer to computing devices communicating along an ICI. As described above, workloads or software applications can be executed more efficiently by communicating data to other devices connected along the same ICI, as opposed to communicating over the relatively slower inter-group network 170.

In some examples, a slice of devices may be a group of contiguously connected devices. Contiguously connected devices are devices that can communicate data either to one another as neighbors along an ICI, or through one or more other devices in the same slice. For example, devices A, B, and C are part of a slice of contiguously connected devices. Devices A and B and devices B and C can communicate directly as neighbors along an ICI. Devices A and C can transmit data to one another through device B, which is part of the same slice as devices A and C.

As part of provisioning computing resources, the provisioning system 100 can be configured to schedule available computing resources to be provisioned according to different heuristics and algorithms to achieve one or more goals. For example, the provisioning system 100 can be configured to provision computing resources to minimize or reduce response time or latency, or to maximize or improve throughput. The provisioning system 100 can be configured to maximize resource utilization, for example to try to schedule computing resource provisioning so that as many computing resources are active and are not kept idle for as long as possible.

These and other goals may outweigh or not consider another potential goal: provisioning computing resources with the largest slice of computing resources possible. For example, given a request for 10 units of computing resources, e.g., 10 computing devices for this example, a provisioning system may provision 10 units of computing resources, a provisioning system may not schedule the provisioning in such a way that 10 units of computing resources are provided in response to a request as a single slice.

While the provisioning strategy may be optimal given the goals of the provisioning system, there is often a competing goal from the requestor, e.g., a user of the computing platform hosting the computing resources, for the provisioned devices to be provided as part of a single slice. One reason for this can be that computing devices in the same slice communicate over the same ICI, and therefore will transmit data to one another faster than devices that may be provisioned but not connected over the same ICI. Another reason can be an implicit expectation that, for large enough requests, entire sections of the computing resources are provisioned, instead of piecemeal portions taken throughout the platform hosting the resources.

Because devices in the same slice can take advantage of the relatively higher throughput and lower latency ICI, different techniques for parallelizing computation can be used more effectively, such as model parallelism in machine learning training. For example, different devices in a slice may be scheduled to perform different operations related to training a machine learning model, and then to communicate output data to each other, for aggregating and arriving at an overall output. One issue that this and other parallelism techniques are susceptible to is the failure of an individual computing device in a slice. If workloads are deployed that require devices to use output from one another as input in its own computations, even a single device failing or going offline may compromise the execution of the workload overall.

Contiguously connected devices can communicate data even faster versus devices that are not contiguously connected, which can further improve the execution or training of machine learning models or other workloads benefiting from parallel or distributed computation as described above.

Provisioning computing resources to provide for larger slices not only requires the determination of the overall availability of such devices on a platform at any given time, but requires the determination of how many slices can be made reliably, e.g., with devices that are not likely to fail. To improve computing resource provisioning with this "large slice" goal in consideration, the provisioning system 100 can determine slice-size thresholds for healthy computing resources in the computing resources 110.

A healthy computing device is a computing device expected to remain online and available for provisioning within a predetermined uptime threshold. For example, the uptime thresholds can be a percentage amount of uptime across a predetermined period of time, e.g., 95% uptime over a fifteen-day period. The predetermined uptime threshold, including the percentage amount and the predetermined period of time, can vary from example-to-example. The predetermined uptime threshold can be an external guarantee provided by the computing platform 105 to users of the platform, or an internal threshold used as part of determining how many slices of different sizes can be provisioned from the computing resources 110.

To determine whether a computing device meets the predetermined uptime threshold, the provisioning system 100 can receive and maintain telemetry or other data from the computing resources 110. This data can be collected from the computing devices of the computing resources 110, and can indicate whether different devices went offline, turned off, broke, or otherwise experienced a state in which the devices were not available for provisioning for some amount of time. Whether the time is shorter, e.g., seconds, or longer, e.g., hours, experiencing some amount of downtime weighs against the device in determining that it is healthy for purposes of provisioning as part of a slice.

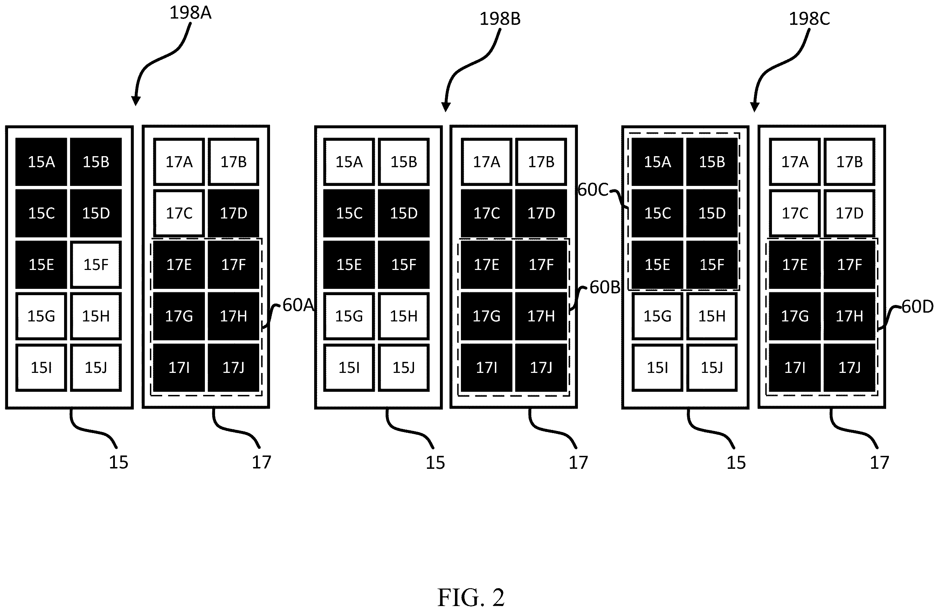

FIG. 2 is a block diagram of example scenarios 198A-198C of two groups 15, 17 of computing devices 15A-15J, 17A-17J illustrating an example slice-size threshold for six-device slices, according to aspects of the disclosure. Group 15 can include computing devices 15A, 15B, 15C, 15D, 15E, 15F, 15G, 15H, 15I, and 15J. Group 17 can include computing devices 17A, 17B, 17C, 17D, 17E, 17F, 17G, 17H, 17I, and 17J. The groups 15, 17 can be additional groups in a cluster not illustrated in FIG. 1, as an example.

To determine what slice-sizes can be provisioned from the computing resources 110, the provisioning system 100 determines which devices are healthy within a predetermined uptime threshold. Determining what slices can be made from healthy devices, as opposed to computing devices in general, addresses the issue of individual failure compromising the computation of computing devices provisioned as part of the same slice.

Scenarios 198A through 198C illustrate different points in time in which some devices are available for provisioning (indicated as filled-in squares, e.g., squares with a black background, in FIG. 2) or not available (indicated as squares that are not filled in, e.g., squares with a white background, as shown in FIG. 2). The points in time corresponding to each scenario 198A through 198C can be within a predetermined window for uptime used to determine which devices are healthy.

Devices that are available throughout each scenario, e.g., devices 15C, 15D, 15E from pod 15 and devices 17E, 17F, 17G, 17H, 17I, and 17J in pod 17 are examples of devices more likely to be considered healthy within a predetermined uptime threshold. Other devices, such as devices 15A, 15B, 15F from pod 15, and devices 17C and 17D from pod 17 are less likely to be considered healthy, at least because these devices are not up during every scenario 198A-198C.

The slice-size threshold for six-device slices in the pods 15, 17 is one. A slice-size threshold of one for six-device slices means that only one slice of size-six can be provisioned from the computing resources 110. In the scenario 198A, one six-device slice 60A can be made from the online devices 17E, 17F, 17G, 17H, 17I, and 17J. In the scenario 198B, one six-device slice 60B can be made from the online devices 17E, 17F, 17G, 17H, 17I, and 17J. In the scenario 198C, two six-device slices 60C and 60D can be made. Six-device slice 60C can be made from the online devices 15A, 15B, 15C, 15D, 15E, and 15F. Six-device slice 60D can be made from the online devices 17E, 17F, 17G, 17H, 17I, and 17J. In the three scenarios provided, the minimum number of six-device slices that can be made is one, from scenarios 198A and 198B.

The provisioning system 100 can track the number of currently provisioned slices, to determine whether additional slices of a certain size can be provisioned using the respective slice-size threshold for that size. Continuing the above example in which the slice-size threshold for six-device slices is one, if the provisioning system 100 does not currently have any six-device slices provisioned, the provisioning system 100 can provision a first request for computing resources fulfilled by a slice of size six. The provisioning system 100 can update a running quantity of size-six slices, from zero to one.

Continuing the example, the provisioning system 100 can determine that the slice-size threshold has been met, and therefore a second request for a slice of size six is not available to be provisioned from healthy computing devices as previously determined. The lack of availability can be indicated through a user interface or other interface for generating and sending resource requests, prior to the request being fulfilled. Devices that are available at the time for provisioning, but which are not considered healthy for purposes of provisioning as part of a slice can still be provisioned. These devices may be provided "on-demand," e.g., in response to provisioning requests received by the system 100. These provisioned devices may be indicated as not part of a slice, for example as part of a prompt on a user interface of the requesting computing device 120 to confirm the output provision 125.

Slices with sizes larger than the size for a given slice-size threshold can be counted against the quantity of slices tracked for purposes of determining whether the given slice-size threshold has been met. For example, a slice-size threshold for 12-device slices across four groups of the platform 105 can be 14 12-device slices. When provisioning the computing resources 110 in response to requests that can be fulfilled with 12-device slices, the provisioning system 100 can track how many 12-device slices have already been provisioned, including how many slices of size 12 can be made from larger slices already provisioned.

For instance, if the platform 105 had provisioned one 14-device slice and two 64-device slices, then the number of 12-cube slices currently provisioned is $floor(14/12) + 2 * floor(64/12)) = 1 + 10 = 11$. Therefore, the remaining number of 12-cube slices that can be used is three 12-device slices. Under this remaining number of slices of 12 devices, three 12-device slices could be provisioned, but a request for three 13-device slices or four 12-device slices would not be provisioned. In this example, the floor of a quotient can be taken when a slice-size does not divide evenly with the slice-size for a given slice-size threshold. In some examples, the quotient can be casted to an integer or the value right of the decimal point can be truncated.

Different slice-size thresholds can be computed, and re-determine, as requests are fulfilled and resources are provisioned, allowing the system to keep track of what slice-size thresholds have or have not been met for slices of 2 devices, 3 devices, 4 devices, and so on. For example, the provisioning system 100 can re-determine slice-size thresholds for different slice-sizes on a rolling basis, e.g., with each cycle of the predetermined uptime window used to determine whether a device is healthy for provisioning as part of a slice.

In some examples, slice-size thresholds are determined once for different slice-sizes and are not re-determined. For example, a slice-size threshold may not change as the computing platform may remain relatively stable in terms of the large-slice schedulability threshold and/or average healthy devices across groups in a cluster. Slice-size thresholds may be re-determined, for example in response to changes in infrastructure availability. Depending on updated availability of computing resources in a computing infrastructure, the slice-size thresholds may increase or decrease.

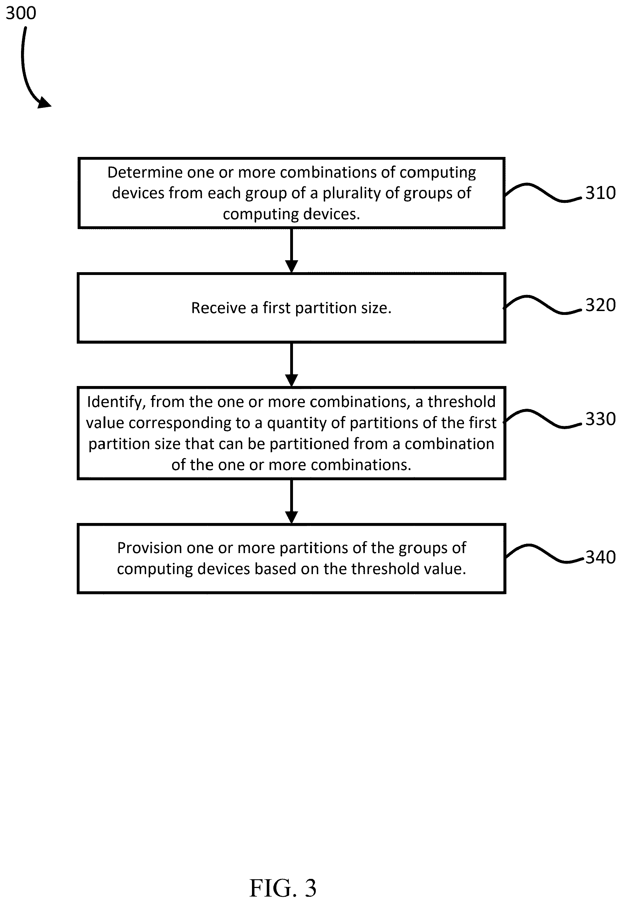

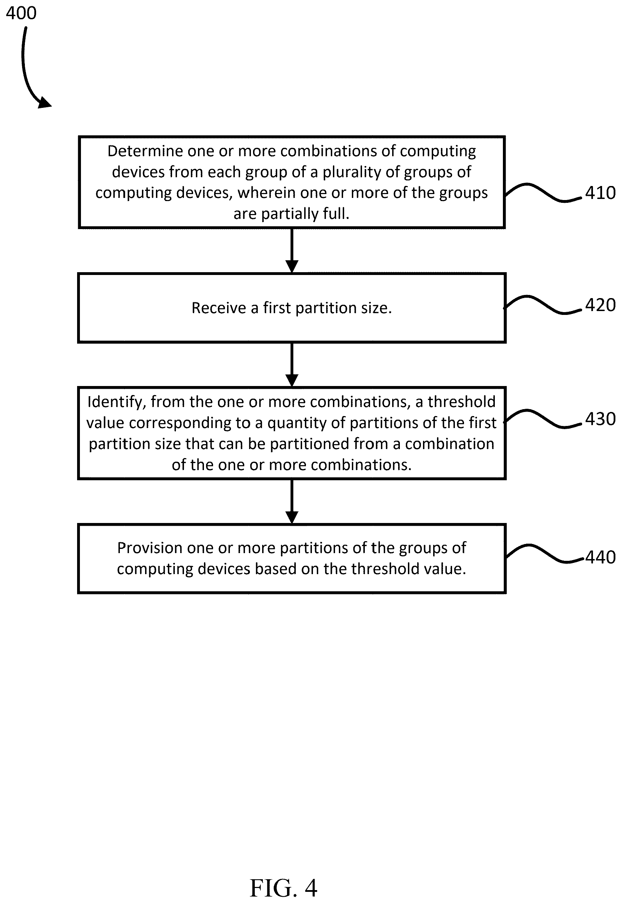

Determining slice-size thresholds for different slice-sizes is an example of modeling the overall availability of slices through the computing resources 110. Availability modeling can result in resource provisioning that is more closely aligned with the conditions workloads or software applications are expected to perform under. As a direct result of provisioning using slice-size thresholds, the provisioning system 100 can improve the overall performance of workloads that benefit from execution over slices of devices, taking advantage of a shared ICI to communicate data faster than over an inter-group network such as a datacenter network. As described, for example, above and in reference to FIGs. 3 and 4, the system 100 can determine the overall health of different devices of the platform 105. This in turn can improve the rate at which devices are provisioned as part of slices that are not likely to fail, when failure in the context of a slice can mean cause issues to ripple beyond the affected device and into the computations of other devices.

The availability modeling of different slice-sizes can complement existing provisioning algorithms or strategies, to balance goals of improving resource utilization, latency, and/or throughput, with topological-aware provisioning in provisioning resources of a slice-size fulfilling incoming requests. Topological-aware provisioning can refer to the use of slice-size thresholds as part of an overall provisioning process, at least because the provisioning system 100 is now able to factor in the shape or topology of computing resources, instead of potential piecemeal provisioning from different parts of the platform.

Returning to FIG. 1, the provisioning system 100 generates an output provision 125, which can include data corresponding to accessing computing resources on the platform 115 provisioned in response to the provisioning request 115. For example, the output provision 125 can include network addresses for accessing the provisioned computing resources, password or security credentials for accessing the provisioned computing resources, and metadata including characteristics of the provision, e.g., what type of computing devices, how the computing devices are arranged, and so on. In some examples, the provisioning system is not a part of the computing platform 105 but in communication the computing platform 105. Example use cases of computing resources 110 include serving or training machine learning models, hosting and running software applications, managing databases, and so on.

Example Methods

To determine slice-size thresholds, the provisioning system 100 can determine or receive two additional thresholds: a large-slice device schedulability threshold for each group 155A-155C of computing devices and a device schedulability threshold for the cluster 180 overall. The large-slice device schedulability threshold is the maximum number of devices that can be provisioned for a given group. The device schedulability threshold is the minimum number of devices across a group (e.g., all devices in all groups) that are available for provisioning within the predetermined uptime threshold.

For example, if the large-slice device schedulability threshold for a group is a 10-device slice, then the group can only provision requests up to 10-device slices in size. The predetermined uptime threshold can be a percentage of time spent without downtime within a rolling predetermined window. The large-slice device schedulability threshold can be predetermined based on the computing platform 105, e.g., to mitigate or reduce any one request from being provisioned in a manner that locks out other users and their requests, or to ensure that there is always a headroom of available devices in case other devices go offline, or resource usage by workloads or software applications spikes, requiring additional devices to maintain operation.

The device schedulability threshold can be an indication of how many devices can be expected to maintain uptime when provisioned as part of a slice that meet the predetermined uptime threshold. The device schedulability threshold can be expressed as a percentage, indicating approximately how many devices of the total number of devices may be expected to be available for provisioning with the predetermined uptime threshold, e.g., as described above with respect to healthy devices. The device schedulability threshold can be empirically determined by the provisioning system 100, for example based on historical data about uptime for the platform 105 implementing the cluster. For example, if the device schedulability threshold is 60%, then, on average, 60% of all devices in a given cluster are healthy based on the predetermined uptime threshold.

Using both the device schedulability threshold and the large-slice device schedulability threshold allows for determining more accurate slice-size thresholds versus using one of these thresholds alone. For example, using only the large-slice device schedulability threshold can result in slice-size thresholds that are too conservative or lower than what can be determined using both the device schedulability and the large-slice device schedulability threshold as described herein. Large-slice device schedulability factors slice-sizes in a given group but does not account for other groups that are available to potentially provision slices of different sizes. In some examples, large-slice device schedulability is not available, for example for partially full groups of devices as described herein, for example with reference to FIG. 3. Device schedulability accounts for available devices throughout a cluster but does not indicate whether slices of any given size can be provisioned to any one group in the cluster.

FIG. 3 is a flow diagram of an example process 300 for provisioning computing resources using slice-size thresholds, according to aspects of the disclosure. The example process can be performed on a system of one or more processors in one or more locations, such as the provisioning system 100 of FIG. 1.

As an example, the system 100 can perform the process 300 to determine combinations of healthy devices that can be formed across one or more groups of a cluster. The combinations are constrained between the large-slice device schedulability threshold and the maximum number of devices in a given group. The sums of devices represented in each possible combination is equal or approximately equal to the device schedulability threshold, to ensure that a possible combination is not in excess of the expected average number of healthy devices across a cluster. The sum of the devices being approximately equal to the device schedulability threshold can refer to a predetermined tolerated margin of difference, e.g., the difference after taking the floor of the device schedulability threshold multiplied with the total number of devices in a cluster. After combinations satisfying these constraints are determined, the system determines the smallest number of slices of a given slice-size that can be made from these combinations. The smallest number of slices is assigned the slice-size threshold for the given size.

The system determines one or more combinations of computing devices from each group of a plurality of groups of computing devices, according to block 310. Computing devices can be individual computing devices, or arrangements of computing devices according to a network topology, e.g., cubes or computing devices, for example as described with reference to FIG. 1. A combination can refer to quantities of healthy computing devices taken from each group. For example, a combination for a cluster of three groups can be 3 devices from a first group, 4 devices from a second group, and 5 devices from a third group. The quantity of devices from each group can vary from combination to combination, but combinations for the purposes of determining slice-size thresholds are constrained, for example as described below.

Possible combinations that are considered can be determined for satisfaction of at least two constraints. One constraint can be that the number of healthy devices represented for a given group (indicated by *devices_group_p* for the *p*th group) for a possible combination be between the minimum number of healthy devices in a group that are available for provisioning as part of a slice (the large-slice schedulability threshold for group *p* referred to as *large_slice_group_p*) and the total number of devices in the group (*assigned_group_p*). For example, this constraint can be represented as:

$$large\_slice\_group\_p \leq devices\_group\_p \leq assigned\_group\_p$$

Continuing the example of three groups in a cluster, assume the large-slice schedulability thresholds for each group is 5, and the total assigned devices per group was 10. Therefore, a combination of 3 devices, 11 devices, and 7 devices for the first, second, and third groups respectively would violate this constraint. This is at least because 3 devices is below the large-slice schedulability threshold for the first group, while 11 devices is over the total assigned devices for the second group. As another example, a combination of 6 devices, 7 devices, and 8 devices would be a valid possible combination.

A second constraint can be that the sum of healthy devices from each group in a combination be equal or approximately equal to the device schedulability threshold times the total number of devices across all of the groups. The product of the total number of devices in a cluster (C) and the device schedulability threshold can be the minimum number of healthy devices available across all the groups. Constraining the sum of healthy devices from each combination to the minimum number of healthy devices can improve the resulting slice-size threshold as an indicator of how many slices can be provisioned that are least likely to encounter downtime or failure within cubes of the provisioned slice. This is at least because the device schedulability threshold is the predicted worst-case state for the cluster's uptime. Provisioning devices that are expected to maintain uptime even within the worst-case state decreases the likelihood that devices not meeting the uptime threshold are provisioned, potentially negatively impacting the performance of a slice with higher probability if and when these devices fail. An example formulation of the second constraint can be:

*devices_group_0 + devices_group_1 + ⋯ devices_group_P = device schedulability threshold * number of devices in a cluster*

for devices 1 through P in a cluster. The second constraint can be met when the sum of devices in a combination is approximately equal to the device schedulability threshold times the number of devices in the cluster, given that the latter may not be an integer value.

The second constraint allows for the system 100 to identify possible combinations that exceed the minimum slice-size set by the large-slice device schedulability threshold of the first constraint, for example because combinations are potentially included where at least some groups can meet a slice-size larger than a given group's large-slice device schedulability threshold, as opposed to excluding a combination because one device cannot accommodate a particular slice-size.

The system receives a first partition size, according to block 320. The first partition size can be a slice-size, received by the system as part of determining the corresponding slice-size threshold. Receiving the first partition size can include receiving the slice-size as input, e.g., as part of determining its corresponding slice-size threshold or generating the slice-size automatically as part of performing availability modeling for multiple slice-sizes, for example as described with reference to FIG. 1. The first partition size can be one or one or more partition sizes received, for example to determine slice-size thresholds for different slice-sizes.

As described herein, slices are examples of partitions of computing resources, in which devices in a slice are communicatively coupled over an inter-chip-interconnect (ICI). Devices in a slice may be contiguously connected. Two devices in a slice are contiguously connected if the devices are directly connected over an ICI or other connection, or connected such that data can be communicated from one device to another device through other devices of the same slice. Contiguously connected devices can further reduce

It is understood that aspects of the disclosure, including the process 300, can be used for finding partition-size thresholds for different sized partitions, which may have other architectural characteristics than slices. For example, partitions may include virtual or physical partitions, and size may be measured according to other measurements, such as processing capacity, bandwidth, storage size, and so on.

The system identifies, from the one or more combinations, a threshold value corresponding to a quantity of slices of the first partition size that can be partitioned from a combination of the one or more combinations, according to block 330.

The threshold value can be a slice-size threshold value. The system can determine the smallest quantity of slices of the first partition size that can be partitioned from the groups represented by the combinations.

For example, after finding the set of combinations satisfying the above constraints, the system can determine a slice-size threshold for a given slice-size, e.g., a slice-size of 6. To do so, the system can compute the floor of the sum of healthy cubes for each combination, divided by the given slice-size. An example formulation can be:

$$f(combination) = \sum_{devices\_group\_i \in combination}^{P} floor\left(\frac{devices\_group\_i}{N}\right)$$

where $N$ is the first partition size, a combination represents quantities from $P$ groups, and *devices_group_i* is the quantity of devices from group $i$ represented in the combination. The system determines $f(combination)$ for each combination of the one or more combination. The smallest $f(\cdot)$ is the threshold value corresponding to the smallest quantity of slices of the first partition size that can be partitioned from the groups.

The system provisions one or more partitions of the groups of computing devices based on the threshold value, according to block 340. For example, in addition to provisioning according to other heuristics or algorithms, the system can also determine whether the threshold value has not been exceeded, and provision a partition of the first partition size. As described with reference to FIG. 1, the provisioning system can track the number of partitions of the first size or larger, to determine whether additional partitions of the first partition size can be provisioned without exceeding the threshold value.

In some examples, not every group of computing devices is a full group. A partially fully group of computing devices is a group that has fewer devices than what is the predetermined maximum number of computing devices for a group of a given type. A type can refer to, for example, hardware characteristics of devices in the group, and/or a network topology connecting the devices in the group.

Determining slice-size thresholds may vary for a partially full group relative to a full group. Partially full groups may not have a large-slice schedulability threshold, therefore there may be no minimum number of computing devices that can be used to form a slice from devices in these groups. One reason for this can be because the large-slice schedulability threshold may be predetermined based on an assumed maximum size of a group, accounting for a headroom or buffer of devices in setting the maximum slice-size that any one group can provision on the platform. If a group is partially full, the group may have fewer devices than the large-slice device schedulability threshold, or meets the threshold, but without enough devices acting as headroom or a buffer. A large-slice device schedulability threshold for a partially full group can be determined by generating a large-slice device schedulability threshold as described above, minus the difference between the size of a full group and the size of the partially full group.

Relying on a device schedulability threshold indicating the average number of healthy devices in a partially full group alone may not be reliable. For example, an average threshold of 25 devices only asserts that 25 computing devices may be usable from a partially-full group. There is no guarantee that, for example, 2 10-device slices could be formed and supported in that partially full group, based on this device schedulability threshold alone. What is guaranteed, however, is that if there are 2 partially-full groups with an average device schedulability thresholds of 25, at least one of the two groups should be capable of provisioning a 25-device slice.

To account for these differences, the provisioning system 100 generates slice-size thresholds based on the sum of all devices in all partially full groups, and each partially full group will be associated with a respective average threshold. The average threshold for each group can be based on the quantity of healthy devices in the partially full group. For example, if a partially full group has 50 computing devices overall, but of those 50 computing devices, 45 computing devices are healthy within the predetermined uptime threshold on average, then the average threshold for the group is 45. An average can be taken over multiple periods of time corresponding to the predetermined uptime threshold. For example, if the predetermined uptime threshold is 95% uptime over 15 days, then the average threshold can be based on how many devices on average are healthy over multiple 15 day periods.

The provisioning system 100 can iterate through possible combinations from full groups and partially full groups, for example using a modified version of the process 300 as described herein with FIG. 3. The system 100 determines quantities of computing devices for combinations for full groups using the large-slice schedulability threshold for each computing group, as described above. To account for the fewer devices in the partially-full groups, the system 100 can use the respective average threshold, minus the respective difference between the maximum size of a full group and the size of each group as a quantity of computing devices in each combination. The respective difference can also be reduced from the respective large-slice schedulability threshold for each partially full group.

FIG. 4 is a flow diagram of example process 400 for provisioning computing resources using slice-size thresholds and partially full groups of computing devices, according to aspects of the disclosure.

The provisioning system determines one or more combinations of computing devices from each group of a plurality of groups of computing devices, wherein one or more of the groups are partially full. A combination can be as described herein with reference to FIG. 3, with a modification for quantities of devices from the one or more partially fully groups. Also as described with reference to FIG. 3, the quantity of devices from each full group can vary from combination to combination.

For full groups in the plurality of groups, possible combinations that are considered can be determined for satisfaction of at least two constraints described above. The first constraint can be on the quantities in a combination for each group between the large-slice device schedulability threshold for the group, and the maximum group size. As described earlier, this constraint can be represented as:

$$large\_slice\_group\_p \leq devices\_group\_p \leq assigned\_group\_p$$

For partially full groups, the quantities that are considered for possible combinations are average thresholds of healthy computing devices for each group. To determine an average threshold, the system 100 can receive data quantifying healthy devices across one or more predetermined periods of time corresponding to the predetermined uptime threshold. The average quantity of healthy devices across these one or more predetermined periods, minus the difference between the size of a full group and the size of the partially-full group, can be the average threshold for the group.

For example, given four groups, of which two groups are full groups and two groups are partially full groups, a possible combination can be: 10 healthy devices in full group 1, 10 healthy devices in full group 2, 7 healthy devices on average in partially full group 3, and 8 healthy devices on average in partially full group 4. Another possible combination may be: 9 healthy devices in full group 1, 11 healthy devices in full group 2, 7 healthy devices on average in partially full group 3, and 8 healthy devices on average in partially group 4..

As described earlier with reference to FIG. 3, the second constraint can be that the sum of healthy devices from each group in a combination be equal or approximately equal to the device schedulability threshold times the total number of devices across all of the groups. The product of the total number of devices in a cluster ($C$) and the device schedulability threshold can be the minimum number of healthy devices available across all the groups. An example formulation of the second constraint can be:

*devices_group_0 + devices_group_1 + $\cdots$ devices_partial_group_P = device schedulability threshold * number of devices in a cluster*

for devices 1 through *P* in a cluster. *"devices_partial_group_P"* can refer to the value of the average threshold of healthy devices for the Pth group, minus the difference between the size of a full group and the size of the P*th* group.

The system receives a first partition size, according to block 420. As described, for example, with reference to FIG. 3, the first partition size can be one of one or more partition sizes, which may also include slice-sizes for which slice-size thresholds can be determined.

The system identifies, from the one or more combinations, a threshold value corresponding to a quantity of partitions of the first partition size that can be partitioned form a combination of the one or more combinations, according to block 430. For example, and as described with reference to FIG. 3, the system can identify the threshold value as the smallest quantity of partitions of the first partition size that can be partitioned from any combination of the one or more combinations. The threshold value is the partition-size threshold for the first partition size, which can be a slice-size threshold when the partitions are slices.

The system provisions one or more partitions of the groups of computing devices based on the threshold value, according to block 440. As described with reference to FIG. 3, the provisioning system can use the threshold value as part of determining a provision of computing resources, for example in response to a request.

Implementations of the present technology can each include, but are not limited to, the following. The features may be alone or in combination with one or more other features described herein. In some examples, the following features are included in combination:

(1) A method for provisioning partitions of groups of computing devices, the method including: determining, by one or more processors, one or more combinations of computing devices from each group of a plurality of groups of computing devices, at least one combination of the one or more combinations including quantities of computing devices from the plurality of computing devices; receiving, from the one or more processors, a first partition size; identifying, by the one or more processors and from the one or more combinations, a threshold value corresponding to a quantity of partitions of the first partition size that can be partitioned from a combination of the one or more combinations; and provisioning, by the one or more processors, a partition of computing devices of a size equal to the first partition size, the provisioning based at least on the threshold value.

(2) The method of (1), wherein a group of computing devices is communicatively coupled through an inter-chip-interconnect.

(3) The method of (2), further including provisioning partitions of computing devices corresponding to the largest partition size of computing devices that meets or exceeds requested quantities of computing resources received by the one or more processors and does not cause a total quantity of provisioned partitions across the plurality of groups of computing devices to exceed the threshold value.

(4) The method of any one of (1) through (3), wherein: a quantity of computing devices for a group represented in the combination is greater than a respective threshold number of computing devices in the group meeting a predetermined uptime threshold, and a sum of the quantities of computing devices for the plurality of groups represented in the combination is approximately equal to a minimum number of computing devices of the plurality of groups meeting the predetermined uptime threshold.

(5) The method of (4), wherein the predetermined uptime threshold is a percentage of uptime for a computing device over a specified period of time.

(6) The method of any one of (1) through (5), wherein: the plurality of groups includes one or more full groups and one or more partially full groups; a sum of the quantities of computing devices for the plurality of groups represented in the combination is a sum of quantities of computing devices represented in the combination for the one or more full groups plus a sum of average quantities of computing devices in the one or more partially full groups meeting a predetermined uptime threshold; and the sum of the quantities is approximately equal to a minimum number of computing devices of the plurality of groups meeting the predetermined uptime threshold.

(7) The method of (6), further including updating, by the one or more processors, a current quantity of partitions that are provisioned from the computing devices and of the first partition size.

(8) The method of any one of (1) through (7), wherein the threshold value corresponds to a smallest quantity of partitions of the first partition size that can be partitioned from any combination of the one or more combinations.

(9) The method of (8), further including: receiving, by the one or more processors, a request to provision the partition of the first partition size; determining, by the one or more processors, that the threshold value has not been exceeded; and provisioning, by the one or more processors, the partition of the first partition size.

(10) The method of any one of (1) through (9), wherein a computing device of the computing devices includes a plurality of computing devices interconnected according to a network topology.

(11) A system for provisioning partitions of groups of computing devices, the system including one or more processors configured to: determine one or more combinations of computing devices from each group of a plurality of groups of computing devices, at least one combination of the one or more combinations including quantities of computing devices from the plurality of computing devices; receive a first partition size; identify, from the one or more combinations, a threshold value corresponding to a quantity of partitions of the first partition size that can be partitioned from a combination of the one or more combinations; and provision a partition of computing devices of a size equal to the first partition size, the provisioning based at least on the threshold value.

(12) The system of (11), wherein the system is further configured to perform the method as in any one of (1) through (10).

(13) One or more non-transitory computer-readable storage media, storing instructions that when executed by one or more processors, causes the one or more processors to perform operations including: determining one or more combinations of computing devices from each group of a plurality of groups of computing devices, at least one combination of the one or more combinations including quantities of computing devices from the plurality of computing devices; receiving a first partition size; identifying, from the one or more combinations, a threshold value corresponding to a quantity of partitions of the first partition size that can be partitioned from a combination of the one or more combinations; and provisioning a partition of computing devices of a size equal to the first partition size, the provisioning based at least on the threshold value.

(14) The non-transitory computer-readable storage media of (13), wherein the operations include performing the method as in any one of (1) through (10).

(15) One or more computer program products, storing instructions that when executed by one or more processors, causes the one or more processors to perform operations including: determining one or more combinations of computing devices from each group of a plurality of groups of computing devices, at least one combination of the one or more combinations including quantities of computing devices from the plurality of computing devices; receiving a first partition size; identifying, from the one or more combinations, a threshold value corresponding to a quantity of partitions of the first partition size that can be partitioned from a combination of the one or more combinations; and provisioning a partition of computing devices of a size equal to the first partition size, the provisioning based at least on the threshold value.

(16) The one or more computer program products of (15), wherein the operations include performing the method as in any one of (1) through (10).

(17) A method for provisioning partitions of groups of computing devices, the method including: determining, by one or more processors, one or more combinations of computing devices from each group of a plurality of groups of computing devices including one or more full groups and one or more partially full groups, at least one combination of the one or more combinations including quantities of computing devices from the plurality of computing devices; receiving, from the one or more processors, a first partition size; identifying, by the one or more processors and from the one or more combinations, a threshold value corresponding to a quantity of partitions of the first partition size that can be partitioned from a combination of the one or more combinations; and provisioning, by the one or more processors, a partition of computing devices of a size equal to the first partition size, the provisioning based at least on the threshold value.

(18) The method of (17), wherein a full group includes a quantity of computing devices equal to a predetermined maximum group size and a partially full group includes a quantity of computing devices less than the predetermined maximum group size.

(19) The method of (17), further including the method of any one of (1) through (10).

(20) The method of (17), further including the method of (19).

(21) A system for provisioning partitions of groups of computing devices, the system including one or more processors configured to: determine one or more combinations of computing devices from each group of a plurality of groups of computing devices including one or more full groups and one or more partially full groups, at least one combination of the one or more combinations including quantities of computing devices from the plurality of computing devices; receive a first partition size; identify, from the one or more combinations, a threshold value corresponding to a quantity of partitions of the first partition size that can be partitioned from a combination of the one or more combinations; and provision a partition of computing devices of a size equal to the first partition size, the provisioning based at least on the threshold value.

(22) The system of (21), wherein the one or more processors are further configured to perform the method of any one of (17) through (20).

(23) One or more non-transitory computer-readable storage media, storing instructions that when executed by one or more processors, causes the one or more processors to perform operations including: determining, by the one or more processors, one or more combinations of computing devices from each group of a plurality of groups of computing devices including one or more full groups and one or more partially full groups, at least one combination of the one or more combinations including quantities of computing devices from the plurality of computing devices; receiving, from the one or more processors, a first partition size; identifying, by the one or more processors and from the one or more combinations, a threshold value corresponding to a quantity of partitions of the first partition size that can be partitioned from a combination of the one or more combinations; and provisioning, by the one or more processors, a partition of computing devices of a size equal to the first partition size, the provisioning based at least on the threshold value.

(24) The one or more non-transitory computer-readable storage media of (23), wherein the operations further include performing the method of any one of (17) through (20).

(25) One or more computer program products, storing instructions that when executed by one or more processors, causes the one or more processors to perform operations including: determining, by the one or more processors, one or more combinations of computing devices from each group of a plurality of groups of computing devices including one or more full groups and one or more partially full groups, at least one combination of the one or more combinations including quantities of computing devices from the plurality of computing devices; receiving, from the one or more processors, a first partition size; identifying, by the one or more processors and from the one or more combinations, a threshold value corresponding to a quantity of partitions of the first partition size that can be partitioned from a combination of the one or more combinations; and provisioning, by the one or more processors, a partition of computing devices of a size equal to the first partition size, the provisioning based at least on the threshold value.

(26) The one or more computer program products of (25), wherein the operations further include performing the method of any one of (17) through (20).

Example Computing Environment

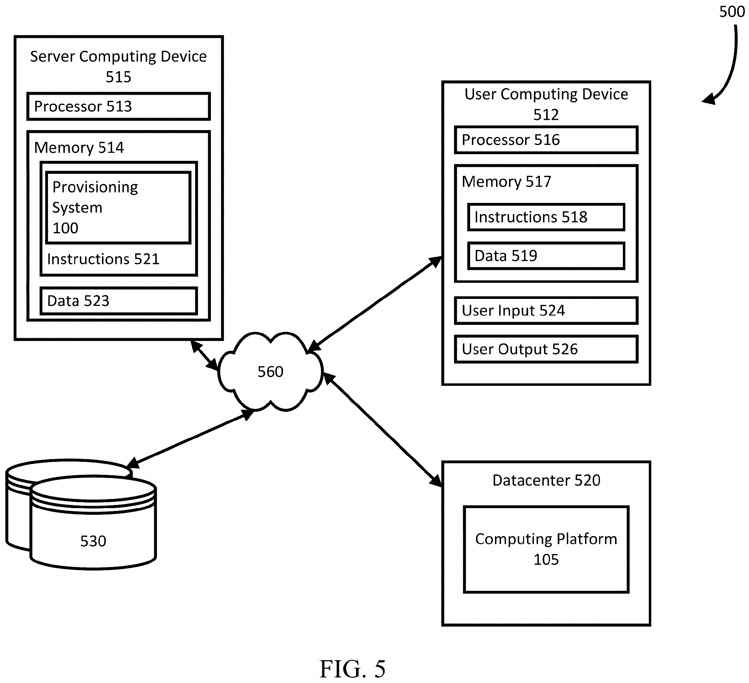

FIG. 5 is a block diagram of an example computing environment 500 for implementing the provisioning system 100. The system 100 can be implemented on one or more devices having one or more processors in one or more locations, such as in server computing device 515. User computing device 512 and the server computing device 515 can be communicatively coupled to one or more storage devices 530 over a network 560. The storage device(s) 530 can be a combination of volatile and non-volatile memory and can be at the same or different physical locations than the computing devices 512, 515. For example, the storage device(s) 530 can include any type of non-transitory computer readable medium capable of storing information, such as a hard-drive, solid state drive, tape drive, optical storage, memory card, ROM, RAM, DVD, CD-ROM, write-capable, and read-only memories.

Aspects of the disclosure can be implemented in a computing system that includes a back-end component, e.g., as a data server, a middleware component, e.g., an application server, or a front-end component, e.g., user computing device 512 having a user interface, a web browser, or an app, or any combination thereof. The components of the system can be interconnected by any form or medium of digital data communication, such as a communication network. Examples of communication networks include a local area network (LAN) and a wide area network (WAN), e.g., the Internet. The datacenter 520 can also be in communication with the user computing device 512 and the server computing device 515 and at least partially house the computing platform 105.

The computing environment 500 can include clients, e.g., user computing device 512 and servers, e.g., server computing device 515. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

The server computing device 515 can include one or more processors 513 and memory 514. The memory 514 can store information accessible by the processor(s) 513, including instructions 521 that can be executed by the processor(s) 513. The memory 514 can also include data 523 that can be retrieved, manipulated, or stored by the processor(s) 513. The memory 514 can be a type of non-transitory computer readable medium capable of storing information accessible by the processor(s) 513, such as volatile and non-volatile memory. The processor(s) 513 can include one or more central processing units (CPUs), graphic processing units (GPUs), field-programmable gate arrays (FPGAs), and/or application-specific integrated circuits (ASICs), such as tensor processing units (TPUs). The processors 513 and memory 514 can form part of the computing resources 110 of the computing platform 105.

In the datacenter 520, processing units can be divided across various machines, server trays, and server racks. A processing unit can be a hardware component available by the platform 105 for provisioning. For example, a processing unit can include a CPU, a GPU, or another type of ASIC, such as a TPU. Another term for a processing unit can be a chip, referring to the substrate on which the processing unit is implemented. Multiple processing units can be on the same substrate, and each processing unit can include one or more processing cores. The datacenter 520 can be one of one or more datacenters housing at least parts of the computing platform 105 and/or the server computing device 515.

The instructions 521 can include one or more instructions that when executed by the processor(s) 513, causes the one or more processors to perform actions defined by the instructions. The instructions 521 can be stored in object code format for direct processing by the processor(s) 513, or in other formats including interpretable scripts or collections of independent source code modules that are interpreted on demand or compiled in advance. The instructions 521 can include instructions for implementing the system 100 consistent with aspects of this disclosure. The system 100 can be executed using the processor(s) 513, and/or using other processors remotely located from the server computing device 515.

The data 523 can be retrieved, stored, or modified by the processor(s) 513 in accordance with the instructions 521. The data 523 can be stored in computer registers, in a relational or non-relational database as a table having a plurality of different fields and records, or as JSON, YAML, proto, or XML documents. The data 523 can also be formatted in a computer-readable format such as, but not limited to, binary values, ASCII, or Unicode. Moreover, the data 523 can include information sufficient to identify relevant information, such as numbers, descriptive text, proprietary codes, pointers, references to data stored in other memories, including other network locations, or information that is used by a function to calculate relevant data.

The user computing device 512 can also be configured similar to the server computing device 515, with one or more processors 516, memory 517, instructions 518, and data 519. For example, the user computing device 512 can be a mobile device, a laptop, a desktop computer, a game console, etc. The user computing device 512 can also include a user output 526, and a user input 524. The user input 524 can include any appropriate mechanism or technique for receiving input from a user, including acoustic input; visual input; tactile input, including touch motion or gestures, or kinetic motion or gestures or orientation motion or gestures; auditory input, speech input, etc., Example devices for user input 524 can include a keyboard, mouse or other point device, mechanical actuators, soft actuators, touchscreens, microphones, and sensors.

The server computing device 515 can be configured to transmit data to the user computing device 512, and the user computing device 512 can be configured to display at least a portion of the received data on a display implemented as part of the user output 526. The user output 526 can also be used for displaying an interface between the user computing device 512 and the server computing device 515. The user output 526 can alternatively or additionally include one or more speakers, transducers or other audio outputs, a haptic interface or other tactile feedback that provides non-visual and non-audible information to the platform user of the user computing device 512.

Although FIG. 5 illustrates the processors 513, 516 and the memories 514, 517 as being within the computing devices 515, 512, components described in this specification, including the processors 513, 516 and the memories 514, 517 can include multiple processors and memories that can operate in different physical locations and not within the same computing device. For example, some of the instructions 521, 518 and the data 523, 519 can be stored on a removable SD card and others within a read-only computer chip. Some or all of the instructions and data can be stored in a location physically remote from, yet still accessible by, the processors 513, 516. Similarly, the processors 513, 516 can include a collection of processors that can perform concurrent and/or sequential operation. The computing devices 515, 512 can each include one or more internal clocks providing timing information, which can be used for time measurement for operations and programs run by the computing devices 515, 512.

The server computing device 515 can be configured to receive requests to process data from the user computing device 512. For example, the environment 500 can be part of a computing platform configured to provide a variety of services to users, through various user interfaces and/or APIs exposing the platform services. One or more services can be a machine learning framework or a set of tools for training or executing generative models or other machine learning models according to a specified task and training data. \

The devices 512, 515 can be capable of direct and indirect communication over the network 560. The devices 515, 512 can set up listening sockets that may accept an initiating connection for sending and receiving information. The network 560 itself can include various configurations and protocols including the Internet, World Wide Web, intranets, virtual private networks, wide area networks, local networks, and private networks using communication protocols proprietary to one or more companies. The network 560 can support a variety of short- and long-range connections. The short- and long-range connections may be made over different bandwidths, such as 2.402 GHz to 2.480 GHz (commonly associated with the Bluetooth® standard), 2.4 GHz and 5 GHz (commonly associated with the Wi-Fi® communication protocol); or with a variety of communication standards, such as the LTE® standard for wireless broadband communication. The network 560, in addition or alternatively, can also support wired connections between the devices 512, 515, including over various types of Ethernet connection.

Although a single server computing device 515, user computing device 512, and datacenter 520 are shown in FIG. 5, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Example workloads include training or serving machine learning models or other types of artificial intelligence (AI) models. Example AI models include machine learning models, such as generative models, language models, foundation models, and/or graphical models.

As an example, the input to the AI model can be in the form of images, videos. An AI model can be configured to extract, identify, and generate features as part of processing a given input, for example as part of a computer vision task. As another example, the input to the AI model can be data files corresponding to a particular format, e.g., HTML files, word processing documents, or formatted metadata obtained from other types of data, such as metadata for image files. A machine learning task in this context can be to classify, score, or otherwise predict some characteristic about the received input. As another example, the input to an AI model can be audio input, including streamed audio, pre-recorded audio, and audio as part of a video or other source or media. A machine learning task in the audio context can include speech recognition, including isolating speech from other identified sources of audio and/or enhancing characteristics of identified speech to be easier to hear.

In addition to data input, including the various types of data described herein, an AI model can also be trained to process features corresponding to given input. Features are values, e.g., numerical or categorical, which relate to some characteristic of the input. For example, in the context of an image, a feature of the image can relate to the RGB value for each pixel in the image. A machine learning task in the image/video context can be to classify contents of an image or video, for example for the presence of different people, places, or things. Machine learning models can be trained to extract and select relevant features for processing to generate an output for a given input and can also be trained to generate new features based on learned relationships between various characteristics of input data.

Computing resources provisioned by the provisioning system can be used for training machine learning models. The machine learning models can be trained according to a variety of different learning techniques. Learning techniques for training the machine learning models can include supervised learning, unsupervised learning, semi-supervised learning, and reinforcement learning techniques. For example, training data can include multiple training examples that can be received as input by a model. The training examples can be labeled with a desired output for the model when processing the labeled training examples. The label and the model output can be evaluated through a loss function to determine an error, which can be backpropagated through the model to update weights for the model. For example, a supervised learning technique can be applied to calculate an error between outputs, with a ground-truth label of a training example processed by the model.

Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

The model or policy can be modified or updated until stopping criteria are met, such as a number of iterations for training, a maximum period of time, a convergence of estimated rewards or value between actions, or when a minimum value threshold is met. A model can be a composite of multiple models or components of a processing or training pipeline. In some examples, the models or components are trained separate, while in other examples, the models or components are trained end-to-end.

Software applications can also be executed on provisioned computing resources. Software applications can include database management systems, for example to manage data stored on the computing platform. The term "database" refers to any collection of data. The data can be unstructured or structured in any manner. The data can be stored on one or more storage devices in one or more locations.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more engines or modules of computer program instructions encoded on one or more tangible non-transitory computer storage media for execution by, or to control the operation of, one or more data processing apparatus.

A computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus. A computer program may, but need not, correspond to a file in a file system. A computer program can be stored in a portion of a file that holds other programs or data, e.g., one or more scripts, in a single file, or in multiple coordinated files, e.g., files that store one or more engines, modules, sub-programs, or portions of code.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "engine" can refer to a software-based system, subsystem, or process that is programmed to perform one or more specific functions. The engine can be implemented as one or more software modules or components or can be installed on one or more computers in one or more locations. A particular engine can have one or more processors or computing devices dedicated thereto, or multiple engines can be installed and running on the same processor or computing device. In some examples, an engine can be implemented as a specially configured circuit, while in other examples, an engine can be implemented in a combination of software and hardware.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers. While operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all examples, and it should be understood that the described program components and systems can be integrated together in one or more software or hardware-based devices or computer-readable media.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, desktop computer, a personal digital assistant (PDA), a mobile audio or video player, a game console, a tablet, a virtual-reality (VR) or augmented-reality (AR) device, a Global Positioning System (GPS), or a portable storage device, e.g., a universal serial bus (USB) flash drive, as examples. Examples of the computer or special purpose logic circuitry can include the user computing device 512, the server computing device 515, or the hardware accelerators 555.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

**Claims**

1. A method for provisioning partitions of groups of computing devices, the method comprising:

   determining, by one or more processors, one or more combinations of computing devices from each group of a plurality of groups of computing devices, at least one combination of the one or more combinations comprising quantities of computing devices from the plurality of computing devices;
   receiving, from the one or more processors, a first partition size;
   identifying, by the one or more processors and from the one or more combinations, a threshold value corresponding to a quantity of partitions of the first partition size that can be partitioned from a combination of the one or more combinations; and
   provisioning, by the one or more processors, a partition of computing devices of a size equal to the first partition size, the provisioning based at least on the threshold value.

2. The method of claim 1, wherein a group of computing devices is communicatively coupled through an inter-chip-interconnect; and/or
   wherein a computing device of the computing devices comprises a plurality of computing devices interconnected according to a network topology.

3. The method of claim 2, further comprising provisioning partitions of computing devices corresponding to the largest partition size of computing devices that meets or exceeds requested quantities of computing resources received by the one or more processors and does not cause a total quantity of provisioned partitions across the plurality of groups of computing devices to exceed the threshold value.

4. The method of any one of claims 1 to 3, wherein:

   a quantity of computing devices for a group represented in the combination is greater than a respective threshold number of computing devices in the group meeting a predetermined uptime threshold, and
   a sum of the quantities of computing devices for the plurality of groups represented in the combination is approximately equal to a minimum number of computing devices of the plurality of groups meeting the predetermined uptime threshold; and

wherein optionally the predetermined uptime threshold is a percentage of uptime for a computing device over a specified period of time.

5. The method of any one of claims 1 to 4, wherein:

the plurality of groups comprises one or more full groups and one or more partially full groups;
a sum of the quantities of computing devices for the plurality of groups represented in the combination is a sum of quantities of computing devices represented in the combination for the one or more full groups plus a sum of average quantities of computing devices in the one or more partially full groups minus a respective difference between the a size of a full group and the size of each of the one or more partially full groups meeting a predetermined uptime threshold; and
the sum of the quantities is approximately equal to a minimum number of computing devices of the plurality of groups meeting the predetermined uptime threshold; and

further optionally comprising updating, by the one or more processors, a current quantity of partitions that are provisioned from the computing devices and of the first partition size.

6. The method of any one of claims 1 to 5, wherein the threshold value corresponds to a smallest quantity of partitions of the first partition size that can be partitioned from any combination of the one or more combinations.

7. The method of claim 6, further comprising:

receiving, by the one or more processors, a request to provision the partition of the first partition size;
determining, by the one or more processors, that the threshold value has not been exceeded; and
provisioning, by the one or more processors, the partition of the first partition size.

8. A system for provisioning partitions of groups of computing devices, the system comprising one or more processors configured to:

determine one or more combinations of computing devices from each group of a plurality of groups of computing devices, at least one combination of the one or more combinations comprising quantities of computing devices from the plurality of computing devices;
receive a first partition size;
identify, from the one or more combinations, a threshold value corresponding to a quantity of partitions of the first partition size that can be partitioned from a combination of the one or more combinations; and
provision a partition of computing devices of a size equal to the first partition size, the provisioning based at least on the threshold value.

9. The system of claim 8, wherein a group of computing devices is communicatively coupled through an inter-chip-interconnect.

10. The system of claim 9, wherein the one or more processors are further configured to provision partitions of computing devices corresponding to the largest partition size of computing devices that meets or exceeds requested quantities of computing resources received by the one or more processors and does not cause a total quantity of provisioned partitions across the plurality of groups of computing devices to exceed the threshold value.

11. The system of any one of claims 8 to 10, wherein:

a quantity of computing devices for a group represented in the combination is greater than a respective threshold number of computing devices in the group meeting a predetermined uptime threshold, and
a sum of the quantities of computing devices for the plurality of groups represented in the combination is approximately equal to a minimum number of computing devices of the plurality of groups meeting the predetermined uptime threshold; and

wherein optionally the predetermined uptime threshold is a percentage of uptime for a computing device over a specified period of time.

12. The system of any one of claims 8 to 11, wherein:

the plurality of groups comprises one or more full groups and one or more partially full groups;
a sum of the quantities of computing devices for the plurality of groups represented in the combination is a sum of quantities of computing devices represented in the combination for the one or more full groups plus a sum of average quantities of computing devices in the one or more partially full groups minus a respective difference between the a size of a full group and the size of each of the one or more partially full group meeting a predetermined uptime threshold; and
the sum of the quantities is approximately equal to a minimum number of computing devices of the plurality of groups meeting the predetermined uptime threshold.

13. The system of claim 12, wherein the one or more processors are further configured to update, by the one or more processors, a current quantity of partitions that are provisioned from the computing devices and of the first partition size; and
wherein optionally the threshold value corresponds to a smallest quantity of partitions of the first partition size that can be partitioned from any combination of the one or more combinations.

14. The system of claim 13, wherein the one or more processors are further configured to:

receive a request to provision the partition of the first partition size;
determine that the threshold value has not been exceeded; and
provision the partition of the first partition size.

15. One or more non-transitory computer-readable storage media, storing instructions that when executed by one or more processors, causes the one or more processors to perform the method according to any one of claims 1 to 7.

FIG. 1

FIG. 2

300

Determine one or more combinations of computing devices from each group of a plurality of groups of computing devices. — 310

Receive a first partition size. — 320

Identify, from the one or more combinations, a threshold value corresponding to a quantity of partitions of the first partition size that can be partitioned from a combination of the one or more combinations. — 330

Provision one or more partitions of the groups of computing devices based on the threshold value. — 340

FIG. 3

400

```
Determine one or more combinations of computing
devices from each group of a plurality of groups of
computing devices, wherein one or more of the groups
are partially full.
```
410

```
Receive a first partition size.
```
420

```
Identify, from the one or more combinations, a threshold
value corresponding to a quantity of partitions of the first
partition size that can be partitioned from a combination
of the one or more combinations.
```
430

```
Provision one or more partitions of the groups of
computing devices based on the threshold value.
```
440

FIG. 4

FIG. 5

| Europäisches Patentamt<br>European Patent Office<br>Office européen des brevets | **EUROPEAN SEARCH REPORT** | **Application Number**<br>EP 25 20 6781 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | Enos J ET AL: "Topology-Aware Job Scheduling Strategies for Torus Networks", Cray User Group CUG2014 proceedings, 6 May 2014 (2014-05-06), pages 1-14, XP093363854, Retrieved from the Internet: URL:https://cug.org/proceedings/cug2014_proceedings/includes/files/pap182.pdf [retrieved on 2026-02-09] * pages 2-9 *<br>----- | 1-15 | INV.<br>G06F9/50<br><br>ADD.<br>H04L41/12 |

**TECHNICAL FIELDS SEARCHED (IPC)**

G06F
H04L

The present search report has been drawn up for all claims

| Place of search | Date of completion of the search | Examiner |
| --- | --- | --- |
| The Hague | 9 February 2026 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)